# EUROPÄISCHE PATENTSCHRIFT

(11) **EP 0 315 876 B1**
(45) Veröffentlichungstag und Bekanntmachung des Hinweises auf die Patenterteilung: **10.04.1996**
(21) Anmeldenummer: 88118183.8
(22) Anmeldetag: 02.11.1988
(51) Int. Cl.: C08F 246/00, C08F 220/60, C08F 220/36, C08F 220/26, C09D 133/14, D21H 17/34, D06M 15/263, D06M 15/285, C04B 26/04

(54) **Urethangruppen enthaltende Dispersionscopolymerisate auf Basis ethylenisch ungesättigter Monomerer, Verfahren zu ihrer Herstellung und ihre Verwendung**
Dispersion copolymers containing urethane groups, based on olefinically unsaturated monomers, process for their preparation and their use
Dispersion de copolymères à base de monomères insaturés éthyléniquement contenant des groupes uréthanes, leur procédé de préparation et leur utilisation

(30) Priorität: 10.11.1987 DE 3738140
(43) Veröffentlichungstag der Anmeldung: 17.05.1989
(73) Patentinhaber: HOECHST AKTIENGESELLSCHAFT, D-65926 Frankfurt am Main (DE)
(72) Erfinder: Rauterkus, Karl Josef, Dr., D-6233 Kelkheim (Taunus) (DE); Huth, Hans-Ullrich, Dr., D-6070 Langen (DE); Angelmayer, Karl-Hans, D-6228 Eltville (DE)

(56) Entgegenhaltungen:
- DE-A- 2 456 737
- FR-A- 2 010 400
- FR-A- 2 134 645

## Beschreibung

### Urethangruppen enthaltende Dispersionscopolymerisate auf Basis ethylenisch ungesättigter Monomerer, Verfahren zu ihrer Herstellung und ihre Verwendung

Die Erfindung betrifft Dispersionscopolymerisate auf der Basis von ethylenisch ungesättigten Monomeren, die Einheiten aus Estern bzw. Amiden von ethylenisch ungesättigten und (co-)polymerisationsfähigen Carbonsäuren mit Urethangruppen in den Ester- bzw. Amidresten enthalten, Verfahren zu ihrer Herstellung durch radikalisch initiierte Emulsions-, Suspensions- oder Perl-Copolymerisation und ihre Verwendung als Beschichtungsmittel, Klebstoffe, geformte Kunststoffe sowie als Bindemittel und Hilfsmittel in chemisch-technischen Zubereitungen.

Polymerisate, die Urethangruppen enthalten, sind bereits bekannt und werden üblicherweise durch Polyaddition aus (Poly-)Isocyanaten und mono- oder polyfunktionellen Hydroxyverbindungen, OH-Gruppen enthaltenden ethylenisch ungesättigten Monomeren, Polyolen oder Präpolymeren hergestellt. Die hierbei unter Urethangruppenbildung resultierenden Produkte stellen Polymere dar, deren Urethangruppen bekanntlich Bestandteil der Polymer-Hauptketten sind. Die Polyadditionsreaktionen werden üblicherweise in Substanz oder, bevorzugt, in inerten organischen Lösungsmitteln durchgeführt. Die Polyaddition in inerten Lösungsmitteln hat u. a. den Vorteil der leichteren Reaktionsführung und der einfacheren Abführung der Reaktionswärme und vereinfacht außerdem die spätere Rezeptierung der Polymeren zu lösungsmittelhaltigen Lacken oder Klebstoffen. Demgegenüber erfordert eine Verwendung dieser Additionspolyurethane in wäßrigen Systemen, z. B. als wäßrige Dispersionen oder als wäßrige Lacke, bekanntlich aufwendige Maßnahmen, um z. B. das Polymerisat zunächst in einem organischen Lösungsmittel in der erforderlichen Konzentration zu lösen, die Lösung in eine wäßrige Form zu überführen bzw. in einem wäßrigen Medium zu dispergieren und zu stabilisieren und anschließend das organische Lösungsmittel wieder aus dem wäßrigen System zu entfernen.
Die in den Polymerketten der Polyurethane vorhandenen Urethangruppen können starke Wechselwirkungen innerhalb der Polymerketten ausüben, was bekanntlich u. a. ihre Eignung zur Verwendung als wasser- und chemikalienbeständige Beschichtungen, Bindemittel, Fasern und Formkörper begünstigt. Hervorzuheben ist dabei auch die sehr gute Haftung von Polyurethanen auf den verschiedensten Substraten aufgrund starker polarer Wechselwirkungen mit diesen Substraten, besonders auf Metallen und insbesondere auf Eisen, wobei auf Eisen u. a. zudem eine gute Korrosionsschutzwirkung resultiert. Polyurethane eignen sich daher sehr gut als Lacke z. B. für Fahrzeugkarosserien, wo sie zu dauerhaften, hochglänzenden, harten und lösungsmittelbeständigen Beschichtungen führen können.

Ethylenisch ungesättigte polymerisationsfähige Verbindungen, die in ihrer monomeren Form bereits Urethangruppen im Molekül enthalten, sind bisher nur in geringer Zahl bekannt geworden. Zum Teil werden die bekannten ethylenisch ungesättigten monomeren Urethane, die noch mindestens eine freie Isocyanatgruppe besitzen, in ihrer monomeren oder über ihren ethylenisch ungesättigten Rest bereits auch polymerisierten oder copolymerisierten Form als latente, d. h. an der freien Isocyanatgruppe blockierte Vernetzungsmittel in härtbaren Lacken und Beschichtungsmassen eingesetzt, wo sie bei höheren Temperaturen durch Reaktion mit funktionellen Gruppen des Lack- bzw. Beschichtungsharzes zur einer Aushärtung des Bindemittels führen.

So wird z. B. eine unter der Bezeichnung WAM⁺⁾-IV-TM im Handel erhältliche ethylenisch ungesättigte und Urethangruppen enthaltende monomere Verbindung der Formel (1) 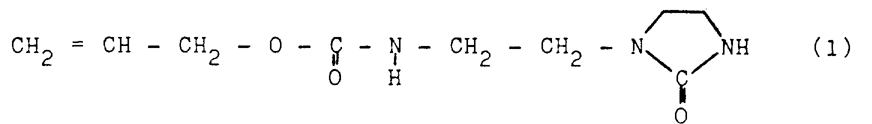 bei der Herstellung üblicher Kunststoffdispersionen durch Emulsionspolymerisation als Comonomeres eingesetzt und soll den resultierenden Copolymerdispersionen bei ihrer Verwendung als Bindemittel in Dispersionsfarben eine verbesserte Naßhaftung auf Alkydharzuntergründen verleihen.
⁺⁾ WAM = Wet Adhesion Monomer

Aus der EP-B0021015 ist die Herstellung eines copolymeren Bindemittels für die Elektrotauchlackierung bekannt, das als Comonomeres zur späteren Vernetzung bei höheren Temperaturen ein blockiertes Vinyl- oder Propenylisocyanat der Formel (2), 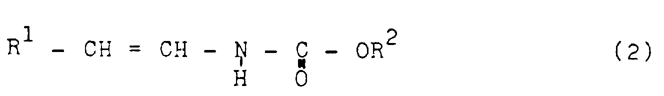 worin R¹ = H, -CH₃ und R = -C₆H₁₂, -C(CH₃)₃, 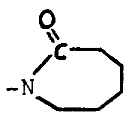 bedeutet, einpolymerisiert enthält. Uber Eigenschaften des unvernetzten copolymeren Bindemittels hinsichtlich seiner Haftung auf Untergründen sowie seiner Witterungsbeständigkeit kann der Druckschrift nichts entnommen werden.

Monomere vom (Meth-)Acrylestertyp mit Urethanresten gemäß Formel (3), 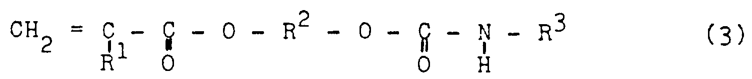 worin R¹ = H, -CH₃, R = Alkylen und R³ = Alkyl bedeuten, sind aus der US-A-3,479,328 bekannt. Ihre Synthese geht von den (Meth-)Acrylsäuren aus, die mit Epoxidverbindungen oder Diolen zu Hydroxyestern umgesetzt werden. Anschließende Reaktion mit Phosgen und Aminen oder mit Harnstoff führt zu Verbindungen der Formel (3), welche sich mit anderen Monomeren, wie z. B. Vinylestern, üblichen (Meth-)Acrylestern und Vinylaromaten in Lösung radikalisch copolymerisieren lassen.

Monomere Urethane der Formel (3) sind auch aus der EP-B0147172 als Reaktivverdünner in strahlungsvernetzbaren Beschichtungen bekannt, wo sie zu vorteilhafteren Resultaten führen sollen als z. B. Vinylpyrrolidon, indem sie einerseits das oligomere Ausgangsharz dünnflüssiger machen und andererseits zu besseren Dehnungs- und Zugfestigkeitswerten bei der ausgehärteten Beschichtung führen.

Copolymerisate, die teilweise Monomereinheiten mit Urethangruppen enthalten, sind auch aus der JP-B 56-45966 bekannt. Man erhält sie durch Copolymerisation von Vinylestern trocknender und halbtrocknender Ölfettsäuren, (Meth-)Acrylestern, Vinylaromaten u. a., mit Reaktionsprodukten aus Hydroxyäthyl(meth-)acrylaten und Mono- bzw. Diisocyanaten sowie 3 bis 40 Gew.-% ungesättigten Carbonsäuren in organischen Lösungsmitteln. Durch Abdestillieren des Lösungsmittels nach der Polymerisation und Neutralisation der Carboxylgruppen kann man das Harz wasserlöslich oder wasserdispergierbar machen und unter Zusatz von organischen Schwermetallsalzen (Sikkativen) das Harz bei höherer Temperatur oxidativ zu Beschichtungen mit klebfreier Oberfläche aushärten.

Aus der JP-B 58-98302 ist die Verwendung der (Meth-)Acrylsäureester von Urethanen, wobei die Urethane nicht näher charakterisiert sind, bei der Herstellung von anorganisch-organischen hitzebeständigen Kompositionen bekannt. Die Herstellung der beschriebenen Harze erfolgt dabei durch Polymerisation von ungesättigten Verbindungen ((Meth-)Acrylsäureestern, Vinylaromaten) in Wasserglas und anschließendem Aushärten des Wasserglases.

Isocyanatoethylmethacrylat der Formel (4) 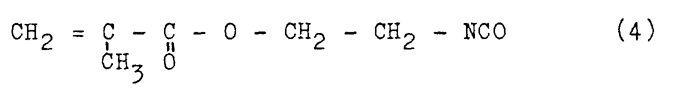 ist bereits bekannt und stellt ein interessantes funktionelles Monomeres dar, das sich in Lösung homo- oder copolymerisieren läßt und durch die Isocyanatgruppe Möglichkeiten der Weiterreaktion bzw. Vernetzung bietet. Durch Blockierung der Isocyanatgruppe mit geeigneten Verbindungen wie Alkoholen, Diketoverbindungen, Phenolen, Oximen oder Heterocyclen lassen sich aus der Verbindung der Formel (4) ungesättigte Derivate synthetisieren, die nach Copolymerisation bei relativ niedrigen Temperaturen rückspalten und vernetzen können (bei ca. 110 bis 150°C). Die Herstellung und Verwendung der beschriebenen Bindemittel, d. h. die (Co-)Polymerisation (mit anderen Monomeren), erfolgt ausschließlich in organischen Lösungsmitteln und ist praktisch ausschließlich auf die Vernetzung der Bindemittel bei höheren Temperaturen gerichtet.

Aus der EP-A 0197635 ist neben der Verwendung ungesättigter Harnstoffe die Herstellung und Verwendung von Makromeren mit Urethangruppen auf der Basis von (Meth-)Acrylestern der Formel (5), 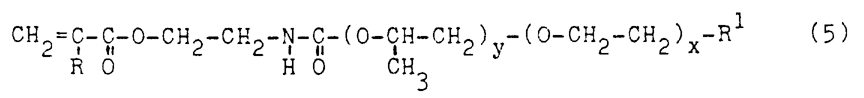 worin R = H oder -CH₃, R¹ = Alkoxy, Alkylphenoxy, Dialkylphenoxy u. a., x = 1 bis 150 und y = 0 bis 50 bedeuten, bekannt. Demzufolge lassen sich Monomere der Formel (5) als Comonomere zu 1 bis 25 Gew.-% mit 5 bis 70 Gew.-% ungesättigten Carbonsäuren und weiteren Monomeren (Vinylestern, (Meth-)Acrylestern, Vinylaromaten) copolymerisieren und es resultieren bei der Emulsionscopolymerisation Verdickerdispersionen, die nach Einstellung auf etwa pH 9 zu hochviskosen wäßrigen Lösungen führen. Die letzteren Produkte sollen eine bessere Elektrolytbeständigkeit und eine bessere Verseifungsstabilität besitzen, vergleichsweise zu bereits bekannten Verdickern. Über Einsatzmöglichkeiten von Monomeren der Formel (5) auf anderen Anwendungsgebieten ist in der EP-A 0197635 nichts beschrieben.

Die bisher bekannt gewordenen und Urethangruppen enthaltenden Emulsionspolymerisate haben entscheidende Nachteile. So lassen sich z. B. monomere Urethane der Formel (2) wegen ihrer Allyldoppelbindung nur in unzureichendem Maße copolymerisieren, so daß ihr dadurch bedingter niedriger Anteil in den Copolymerisaten auch nur einen geringen Einfluß auf die Eigenschaften der Copolymeren ausüben kann. Dementsprechend wirken sich Copolymerisate mit Monomereinheiten der Formel (2) lediglich auf die Naßhaftung von daraus hergestellten Dispersionsfarben auf Alkydharzuntergründen vorteilhaft aus, wogegen sie jedoch hinsichtlich des Korrosionsschutzes auf Metallen keinerlei Wirkung zeigen. Auch die aus der EP-A 0197635 bekannten Copolymerisate mit Monomereinheiten der Formel (5) sind nicht für die Oberflächenbeschichtung fester Substrate, insbesondere nicht für den Korrosionsschutz auf Metallen, geeignet, da Filme aus den beschriebenen Dispersionscopolymerisaten infolge ihres hohen Anteils an Carboxylgruppen zu stark wasserempfindlich sind.

Aus FR-A 2 010 400 sind spontan vernetzende Homo- und Copolymere bekannt, die Gruppen des Typs -CONH-CH₂-NH-COOR enthalten. Da R einen Hologenalkylsubstituenten darstellt, ist eine aus heutiger Sicht unerwünschte Halogenwasserstoff-Freisetzung unvermeidlich.

FR-A 2 134 645 beschreibt photopolymerisierbare Copolymere mit Monomereinheiten des Typs 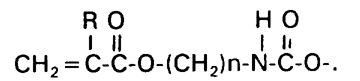 Ähnliche Polymere werden auch in DE-A 24 56 737 aufgeführt. Diese Copolymerisate verfügen jedoch ohne nachträgliche Lichteinwirkung oder Wärmebehandlung nicht über eine ausreichende Haftung auf beliebigen Untergründen.

Der vorliegenden Erfindung lag somit die Aufgabe zugrunde, die vorstehend dargelegten Nachteile der bekannten Urethangruppen enthaltenden Copolymeren zu überwinden und insbesondere Copolymere mit Urethangruppen verfügbar zu machen, die sich vorzugsweise durch übliche Emulsionscopolymerisation herstellen lassen und sich sodann vorteilhaft und ohne zusätzliche Wärmebehandlung als Beschichtungsmittel, insbesondere für den Korrosionsschutz von Metallen, ferner zur Herstellung von Filmen, Fasern, Klebemitteln, Lacken, Pressmassen, Formkörpern, als Verdicker in flüssigen Medien, als Imprägniermittel für poröse Untergründe sowie als Hilfsstoffe in der Leder-, Textil-, Papier- und Baustoffindustrie verwenden lassen.

Es wurde nun überraschenderweise gefunden, daß man die vorgenannten Schwierigkeiten überwinden kann, wenn man durch Suspensions- oder Emulsionspolymerisation hergestellte Dispersionscopolymerisate auf der Basis von ethylenisch ungesättigten Monomeren verwendet, die mindestens 1 Gew.-% Monomereinheiten aus Verbindungen der Formel (I), 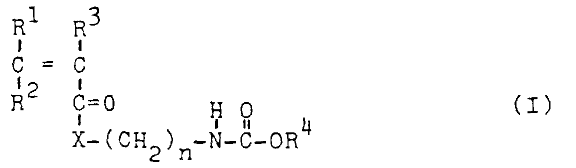 worin
- R¹, R,: die gleich oder verschieden sein können, H oder -CH₃, vorzugsweise R¹ = R = H,
- R³ =: H, -CH₃, vorzugsweise -CH₃,
- X =: O, NH, vorzugsweise O,
- R⁴ =: (C₁-C₂₂)-Alkyl, (C₅-C₇)-Cycloalkyl, das gegebenenfalls durch (C₁-C₁₂)-Alkylreste substituiert ist, (C₆-C₁₀)-Aryl, das gegebenenfalls durch (C₁-C₁₂)-Alkylreste substituiert ist, vorzugsweise Phenyl oder Naphthyl, Aralkyl mit 7 bis 24 C-Atomen, vorzugsweise Benzyl, S- oder N-haltige 5- oder 6-gliedrige Ringe bildende Heterocyclen, die gegebenenfalls durch (C₁-C₆)-Alkylreste substituiert sind, vorzugsweise Heterocyclen mit 1 oder 2 N-Atomen, einen β-Diketorest, vorzugsweise den Acetoacetylrest, und
- n =: eine Zahl von 2 bis 4, vorzugsweise 2, bedeuten, sowie Allylacetoacetat enthalten.

Gegenstand der Erfindung sind daher Dispersionscopolymerisate auf der Basis von ethylenisch ungesättigten Monomeren, die Einheiten aus Estern oder Amiden von ethylenisch ungesättigten und (co-)polymerisationsfähigen Carbonsäuren mit Urethangruppen in den Ester- bzw. Amidresten enthalten und durch Emulsions-, Suspensions- oder Perl -Copolymerisation hergestellt worden sind, dadurch gekennzeichnet, daß sie mindestens 1 Gew.-%, vorzugsweise mindestens 2 Gew.-%, insbesondere mindestens 4 Gew.-%, Monomereinheiten aus Verbindungen der Formel I sowie Allylacetoacetat enthalten.

Bevorzugt sind solche Monomereinheiten aus Verbindungen der Formel I, bei denen in Formel I R¹ = R = H, R³ = -CH₃, X = Sauerstoff und n = 2 bedeutet. Sie können in ihrer monomeren, der Formel I entsprechenden Form in einfacher und bekannter Weise durch Umsetzung von Isocyanatoethylmethacrylat und den entsprechenden Alkoholen oder Phenolen in Substanz hergestellt werden, wobei man zur besseren Reaktionsführung die Umesterung auch in inerten organischen Lösungsmitteln oder auch in sog. Reaktivverdünnern, das sind Monomere wie Vinylester, (Meth-)Acrylester, Vinylaromaten und ähnliche Monomere, mit denen später die Copolymerisation durchgeführt werden soll, durchführen kann.

Erfindungsgemäße copolymere Dispersionscopolymerisate enthalten außer den Monomereinheiten aus Verbindungen der Formel I sowie Allylacetoacetat vorzugsweise Comonomereinheiten aus folgenden copolymerisationsfähigen Monomeren: Vinylester von (C₁-C₁₈)-Carbonsäuren, insbesondere Vinylacetat, Vinylpropionat, Vinylversatat, Vinyllaurat; (Meth-)Acrylester von (C₁-C₁₈)-Alkoholen, insbesondere Methylmethacrylat, Butylmethacrylat, Oktylmethacrylat, Ethylacrylat, Isobutylacrylat, 2-Ethylhexylacrylat; Vinylaromaten mit bis zu 18 C-Atomen, insbesondere Styrol und Vinyltoluol; Vinylchlorid, Ethylen, Acrylnitril, Diester von Maleinsäure und/oder Fumarsäure mit C₁-C₁₈-Alkoholen und Vinylpyrrolidon. Comonomereinheiten können sowohl einzeln als auch zu mehreren in den copolymeren Dispersionspolymerisaten enthalten sein. Besonders bevorzugt sind in den Dispersionspolymerisaten diejenigen Comonomereinheiten, die in wäßrigen Dispersionen verseifungsbeständig sind und stabile copolymere Produkte bilden können. Der Anteil an Comonomereinheiten in den copolymeren Dispersionspolymerisaten richtet sich sowohl hinsichtlich ihrer Art als auch hinsichtlich ihrer Menge nach den für das copolymere Endprodukt gewünschten anwendungstechnischen Eigenschaften, wobei zur Ermittlung und Einstellung der Anteile die dem Fachmann bekannten Auswahlkriterien Anwendung finden können.

Bei Verwendung erfindungsgemäßer Dispersionscopolymerisate in Form von wäßrigen Dispersionen sollte deren minimale Filmbildungstemperatur (MFT) unterhalb oder im Bereich der vorgesehenen Anwendungstemperatur liegen, d. h., vorzugsweise zwischen 0 und 80°C, insbesondere zwischen 0 und 40°C. Werden Dispersionscopolymerisate mit härterer Einstellung verwendet, so können zum Erreichen der erforderlichen Filmbildungstemperatur übliche Filmbildehilfsmittel oder äußere Weichmacher mitverwendet werden. Ist dies nicht erwünscht, so sollte die MFT besonders bevorzugt im Bereich zwischen 0 und 25°C liegen. Folgende Monomereinheitenkombinationen eignen sich in Kombination mit Monomereinheiten aus Verbindungen der Formel I, z. B. ganz besonders in den nachstehend angegebenen Gewichtsverhältnissen (GT = Gewichtsteile) als Bestandteil von copolymeren Dispersionspolymerisaten im Sinne der Erfindung:

| | |
|---|---|
| Butylacrylat / Methylmethacrylat | 10-90 GT / 90-10 GT |
| Butylacrylat / Styrol | 10-90 GT / 90-10 GT |
| Oktylacrylat / Methylmethacrylat | 5-80 GT / 95-20 GT |
| Oktylacrylat / Styrol | 5-80 GT / 95-20 GT |
| Vinylacetat / Butylacrylat | 40-80 GT / 60-20 GT |
| Vinylacetat / Vinylversatat | 50-80 GT / 50-20 GT |

Hinsichtlich des Eigenschaftsbildes der erfindungsgemäß zu verwendenden Dispersionscopolymerisate kann es in manchen Fällen vorteilhaft sein, wenn die Dispersionscopolymerisate neben den bereits genannten Comonomereinheiten noch weitere Comonomereinheiten aus copolymerisationsfähigen ethylenisch ungesättigten Monomeren mit funktionellen Resten, vorzugsweise Resten aus der Gruppe -OH, -SO₃H bzw. deren Salzen, -N(R⁵)₂, -N(R⁶)₃, -COOH bzw. deren Salzen, -CON(R⁷)₂ oder Epoxid enthalten, wobei R⁵ = (C₁-C₆)-Alkyl oder H, R⁶ = (C₁-C₁₈)-Alkyl, (C₇-C₂₂)-Aralkyl, Glycidyl, H, (C₁-C₄)-Hydroxyalkyl, (C₁-C₆)-Carboxyalkyl und R⁷ = (C₁-C₆)-Alkyl, H, Methylol, (C₁-C₄)-Alkoxy, (C₂-C₆)-Alkylsulfonsäure bzw. deren Salze bedeuten. Solche Comonomereinheiten können in den Dispersionscopolymerisaten vorzugsweise in Mengen von 0 bis 19 Gew.-%, insbesondere 0,1 bis 5 Gew.-%, bezogen auf das Dispersionscopolymerisat, enthalten sein und bevorzugt aus Einheiten von z. B. folgenden Monomeren bestehen:
Hydroxyethyl(meth-)acrylat, Hydroxypropyl(meth-)acrylat, Polyhydroxypropyl(meth-)acrylat, Glycidylmethacrylat, (Meth-)Acrylsäure, Maleinsäure, Fumarsäure, Itakonsäure sowie die Halbester der drei letzteren, Dimethylaminoneopentyl(meth-)acrylat, Dimethylaminopropyl(meth-)acrylamid, Dimethylaminoethyl(meth-)acrylat, 2-N-Morpholinoethyl(meth-)acrylat, tert.-Butylaminoethyl(meth-)acrylat, (Meth-)Acrylamid, N-Methylol(meth-)acrylamid, Trimethylammoniumethylacrylat-chlorid, Benzyl-dimethylammoniumethylmethacrylat-chlorid, Trimethylammoniumneopentylacrylat-methosulfat, Acrylamidopropyltrimethylammonium-chlorid, Diallyl-dimethylammonium-chlorid.

Bei wäßrigen Dispersionen erfindungsgemäßer Dispersionscopolymerisate, die Monomereinheiten mit funktionellen Gruppen enthalten, kann es vorteilhaft sein, zu deren Stabilisierung oberflächenaktive Verbindungen (Emulgatoren) und/oder Schutzkolloide zu verwenden. Die Konzentration solcher Hilfsmittel kann bei Emulgatoren vorzugsweise 0 bis 20 Gew.-%, insbesondere 0,1 bis 7 Gew.-%, und bei Schutzkolloiden vorzugsweise 0 bis 5 Gew.-%, insbesondere 0,1 bis 2 Gew.-%, jeweils bezogen auf das Dispersionspolymerisat, betragen.

Als Emulgatoren kommen übliche nichtionische Tenside, vorzugsweise z. B. aus der Gruppe der grenzflächenaktiven Umsetzungsprodukte von aliphatischen, cycloaliphatischen, araliphatischen, aliphatischaromatischen, aromatischen Carbonsäuren, Alkoholen, Phenolen, Aminen mit Epoxiden, wie z. B. Ethylenoxid, sowie Blockcopolymerisate aus verschiedenen Epoxiden, wie z. B. Ethylenoxid und Propylenoxid, zur Anwendung. Ferner können übliche anionische Tenside, vorzugsweise z. B. tensioaktive Ammonium- sowie Alkalisalze von Fettsäuren (Seifen), Fettalkoholsulfaten, Isäthionsäureäthern von Fettalkoholen, Alkansulfonaten, Alkylbenzolsulfonaten, (oxethylierten) Sulfobernsteinsäureestern, polyoxethylierten Fettalkoholsulfatern, Alkylphenol- oder (Alkyl-)Naphtholpolyoxethylatsulfaten und Fettalkoholphosphaten zur Anwendung gelangen. Als weitere Emulgatoren kommen z. B. auch übliche grenzflächenaktive primäre, sekundäre und tertiäre Fettamine in Kombination mit organischen oder anorganischem Säuren sowie außerdem tensioaktive quaternäre Alkylammoniumverbindungen in Frage. Darüber hinaus können in manchen Fällen auch bekannte amphotere Tenside mit zwitterionischer Struktur, beispielsweise vom Betaintyp, wie z. B. Alkylamidopropylbetaine, vorteilhaft sein. Die genannten Emulgatoren können sowohl einzeln als auch, soweit sie miteinander verträglich sind, in Kombination untereinander oder miteinander in üblicher Weise verwendet werden.

Gegebenenfalls können in den Dispersionen auch übliche Schutzkolloide mitverwendet werden, und zwar bevorzugt solche auf der Basis von hochmolekularen, HO-, (R)₂N-, (R)₃ ⁺N-, HOOC- oder ROOC-Gruppen tragenden organischen Verbindungen, wobei R z. B. vorzugsweise einen aliphatischen Rest mit 1 bis 8 C-Atomen bedeuten kann, die wasserlöslich oder wasserdispergierbar sind, dabei im wesentlichen keine oder keine ausgeprägte Grenzflächenaktivität entfalten und ein ausgeprägtes Dispergiervermögen besitzen. Bevorzugte Schutzkolloide sind solche von nichtionogener oder kationischer Struktur, wie z.B. Zelluloseäther, Polyvinylalkohole, Polysaccharide, Polyvinylpyrrolidone, wobei diese Verbindungen bevorzugt durch Aminogruppen, quaternäre Ammoniumgruppen, Carboxyl- bzw. Carboxylatgruppen sowie Carboxyalkylgruppen (Estergruppen) substituiert sein können. Quaternäre Ammoniumgruppen können z.B. durch Substitution mittels Kationisierungsreagenzien, wie z.B. Glycidyltrimethylammoniumchlorid, in die zugrundeliegenden Makromoleküle eingeführt werden. Kationische Polyvinylalkohole können z.B. auch durch Verseifen entsprechender amino- und/oder ammoniumgruppenhaltiger Vinylacetatcopolymerisate erhalten werden. Die zu verwendenden Schutzkolloidmengen richten sich nach den gewünschten Dispersionseigenschaften, insbesondere der Feinteiligkeit der Dispersionspartikel. Höhere Schutzkolloidmengen wirken der Feinteiligkeit der Dispersionen im allgemeinen entgegen.

Zur Auslösung der Copolymerisation können bei der Herstellung erfindungsgemäßer Dispersionscopolymerisate alle in der emulsionspolymerisation üblichen, vorzugsweise wasserlöslichen, und Radikalketten initiierenden Systeme, wie Azoverbindungen (Azoisobutyronitril), Peroxide (z.B. Benzoylperoxid), Perester (tert.-Butylperacetat) oder Percarbonate (Dicyclohexylperoxidicarbonat), die auch anionischer Natur sein können, verwendet werden. Bevorzugte Initiatoren sind wasserlösliche Verbindungen wie z.B. 2,2'-Azobis-(2-amidinopropan)-dihydrochlorid, 2,2'-Azobis(N,N'-dimethylenisobutyramidin)-dihydrochlorid, 4,4'-Azobis-(4-cyanovaleriansäure), H₂O₂, tert.-Butylhydroperoxid, Persulfate wie Ammoniumpersulfat, Natriumpersulfat, Kaliumpersulfat, Redox-Systeme wie H₂O₂ und Ascorbinsäure, Peroxide und mehrwertige Metallsalze, tert.-Butylhydroperoxid und Rongalit, wobei Redox-Systeme vor allem zur Senkung des Restmonomerengehaltes in der Nachreaktionsphase der Polymerisation vorteilhaft sein können, ferner energiereiche Strahlung sowie übliche Photoinitiatoren.

Zur Molekulargewichtssteuerung können bei der Emulsions-, Suspensions- oder Perl-Polymerisation auch übliche Regler, wie z.B. Merkaptane oder Halogenkohlenwasserstoffe zur Molekulargewichtserniedrigung, oder aber, gegebenenfalls bis zu 5 Gew.-%, bezogen auf die Gesamtmonomerenmenge, mehrfach ethylenisch ungesättigte oder mehrfachfunktionelle und zur Vernetzung befähigte Verbindungen, wie z.B. Divinylbenzol, Ethylenglykoldimethacrylat, Ethylenglykoldiacrylat, Butandioldimethacrylat, Butandioldiacrylat, Triallylcyanurat, Melamin, Isocyanatoethylmethacrylat zur Molekulargewichtserhöhung verwendet werden.

Die Herstellung erfindungsgemäßer Dispersionscopolymerisate kann bevorzugt nach bekannten Verfahren der radikalisch initiierten Emulsionspolymerisation (Batch-, Voremulsions- oder Dosierverfahren), gegebenenfalls unter Mitverwendung von Emulgatoren, Schutzkolloiden, Dispergiermitteln, Molekulargewichtsreglern und pH-Wert-Regulatoren, erfolgen, wobei wäßrige Dispersionen mit Gehalten an Dispersionscopolymerisatfeststoff von vorzugsweise 10 bis 70 Gew.-%, insbesondere 20 bis 55 Gew.-%, bezogen auf die Dispersion, erhalten werden können. Auch die Einstellung von niedrigeren oder höheren Feststoffgehalten in den Dispersionen ist nach üblichen Methoden möglich. Der pH-Wert der wäßrigen Dispersionen liegt üblicherweise im Bereich von 3-9, vorzugsweise 4 bis 8,5. Auch die Isolierung der Dispersionscopolymerisate, vorzugsweise in Pulverform, ist aus den Dispersionen nach üblichen Methoden möglich, vorzugsweise z. B. durch Sprühtrocknung oder durch Vermischen der Dispersion mit flüssigen Fällungsmitteln nach üblichen Methoden.

Als Lösungsmittel für wasserfreie erfindungsgemäße Dispersionscopolymerisate kommen z.B. aliphatische und vorzugsweise aromatische Kohlenwasswerstoffe, höhere Alkanole, Äther mit höheren Alkylresten sowie cyclische Äther wie Tetrahydrofuran und Dioxan, ferner Ketone sowie Ester infrage.

Es ist prinzipiell auch möglich, Polymerisate vom Typ der erfindungsgemäßen Dispersionscopolymerisate z. B. durch radikalisch initiierte Lösungspolymerisation in organischen Lösungsmitteln herzustellen und die resultierenden organischen Copolymerisatlösungen unter Emulgatorzusatz in Wasser zu emulgieren, anschließend das organische Lösungsmittel abzudestillieren und dadurch zu wäßrigen Copolymerisatdispersionen zu gelangen. Dieser Weg ist jedoch aufwendig und gegebenenfalls umweltbelastend im Gegensatz zu der bevorzugten Emulsions-, Suspensions- oder Perl-Copolymerisation in wäßrigem Medium.

Bei der Emulsionspolymerisation zur Herstellung erfindungsgemäßer Dispersionscopolymerisate wird üblicherweise und vorzugsweise so verfahren, daß man einen Teil des oder der zu verwendenden Monomeren der Formel I im Gemisch mit anderen bekannten und copolymerisationsfähigen Monomeren in der wäßrigen Phase vorlegt, die Polymerisation durch radikalische Initiierung startet und das restliche Monomerengemisch unter Rühren und Aufrechterhaltung der benötigten Polymerisationstemperatur im Bereich von 20 bis 100°C, vorzugsweise 40 bis 90°C, gegebenenfalls in voremulgierter Form, innerhalb von 1 bis 8 Stunden dem Polymerisationsgefäß zudosiert. In manchen Fällen kann es auch vorteilhaft sein, daß man die gesamte Monomerenmenge und die wäßrige Phase in dem Polymerisationsreaktor vorlegt und die Polymerisationsreaktion in der Form eines Batchansatzes durchführt.

Die erfindungsgemäßen Dispersionscopolymerisate können sowohl in Substanz als auch in Form ihrer wäßrigen Dispersionen oder gelöst in organischen Lösungsmitteln für eine Reihe verschiedener Einsatzgebiete in sehr vorteilhafter Weise verwendet werden. Bevorzugt werden die Produkte erfindungsgemäß als Beschichtungsmasse für feste Substrate, als Ausgangsmaterial für die Herstellung von Filmen, Folien, Fasern, Klebstoffen, Lacken Pressmassen und Formkörpern, als Verdicker in wäßrigen Zubereitungen und als Imprägniermittel für poröse Substrate, ferner bevorzugt auch als Hilfsstoffe zum Verkleben von Leder, Textilien, Papier, als Bindemittel bei der Faserlederherstellung, der Papierherstellung, der Papierveredlung und der Textilimprägnierung sowie auch in der Bauindustrie als Bindemittel bei der Herstellung von Beton, Mörtel, Putz und Anstrichen, verwendet.

Die Erfindung wird durch die nachstehenden Beispiele näher erläutert.

### Beispiel 1

In einem 2 l-Dreihalskolben mit Rührer, Tropftrichter und Rückflußkühler werden 410 g entsalztes Wasser (E-Wasser) und 7,5 g einer 50 gew.-%igen wäßrigen Lösung von Natrium-Laurylpolyglykoläthersulfat (Emulgator) vorgelegt. Aus 480 g E-Wasser, 15 g 50 gew.-%ige wäßrige Natrium-Laurylpolyglykoläthersulfatlösung, 22,5 g Acrylsäure, 750 g 2-Methacryloylethylcarbamidsäureaoktylester, 18 g Allylacetoacetat und 3,4 g Ammoniumpersulfat (APS) wird eine Emulsion hergestellt. 30 g dieser Monomeremulsion werden in die vorgelegte wäßrige Emulgatorlösung gegeben und die Vorlage unter Rühren auf 80°C erwärmt. Durch Zugabe von 0,35 g APS in die Vorlage bei 55 - 60°C wird die Polymerisation gestartet und es wird unter Rühren bei 80°C die restliche Monomeremulsion innerhalb von 3,5 Stunden zudosiert. Nach einer Nachreaktionsphase von 2,5 Stunden wird das Reaktionsgemisch auf Raumtemperatur (RT) abgekühlt. Eine Stunde nach Ende der Monomeremulsionszudosierung werden dem Reaktionsgemisch 15 ml 17 gew.-%iger Ammoniak und nach erfolgter Abkühlung auf RT weiterer 17 gew.-%iger Ammoniak zugesetzt, um die resultierende Dispersion auf pH 8,5 einzustellen. Man erhält eine Dispersion mit einem Feststoffgehalt von 41,4 Gew.-%.

### Beispiel 2

Entsprechend dem Beispiel 1 wird eine Dispersion hergestellt, wobei in Abänderung des Beispiels 1 statt 750 g 2-Methacryloylethyl-carbamidsäureoktylester nur 450 g dieses monomeren Urethans sowie zusätzlich 155 g Methylmethacrylat und 145 g Butylacrylat eingesetzt werden werden. Die resultierende und auf pH 8,5 eingestellte Dispersion hat einen Feststoffgehalt von 43,9 Gew.-%.

### Beispiel 3

In einer Rührapparatur wie in Beispiel 1 beschrieben werden 206,9 g E-Wasser und 1,9 g Natrium-Laurylpolyglykoläthersulfat vorgelegt. Es wird aus 173,1 g Methylmethacrylat, 183,1 g Butylacrylat, 18,75 g 2-Methacryloylethyl-carbamidsäureoktylester, 11,25 g Acrylsäure, 9 g Allylacetoacetat, 0,95 g Ammoniumpersulfat (APS), 3,75 g Natrium-Laurylpolyglykoläthersulfat und 243,75 g E-Wasser eine Emulsion hergestellt und es werden 15 g davon in die vorgelegte wäßrige Emulgatorlösung gegeben. Unter Rühren wird die Vorlage auf 80°C erwärmt und bei 55 - 60°C werden 0,175 g APS zum Starten der Polymerisation zugefügt. Die restliche Monomeremulsion wird innerhalb von 3,5 Stunden unter Rühren in die Vorlage dosiert. Die weitere Durchführung der Emulsionspolymerisation erfolgt analog Beispiel 1. Die resultierende und auf pH 8,5 eingestellte Dispersion hat einen Feststoffgehalt von 44,7 Gew.-%.

### Vergleichsbeispiel 1

Es wird entsprechend dem Beispiel 1 eine Dispersion mit der Abänderung hergestellt, daß anstelle von 750 g 2-Methacryloylethyl-carbamidsäureoktylester 750 g einer Mischung aus Methylmethacrylat/Butylacrylat im Verhältnis 51:49 eingesetzt werden. Die resultierende und auf pH 8,5 eingestellte Dispersion hat einen Feststoffgehalt von 43,9 Gew.-%.

### Beispiel 4

### Anwendungsprüfungen

Die Dispersionscopolymerisate wurden in wäßriger Dispersionsform als Klarlack geprüft. Dazu wurden die Dispersionen der Beispiele 1 bis 3 sowie des Vergleichsbeispiels 1 jeweils als solche mit einer 75 µm Rakel auf die Oberflächen von entfetteten, phosphatierten (= decarpierten) Stahlblechen beidseitig aufgezogen und nach erfolgter Filmbildung 14 Tage bei Raumtemperatur an der Luft nachgetrocknet, wobei auf den Prüfblechen jeweils ein ca. 35 µm dicker, festhaftender Klarlackfilm resultierte. Die solchermaßen beschichteten Prüfbleche wurden anschließend einem Salzsprühtest nach DIN 53167 unterworfen, um die Korrosionsschutzwirkung der Dispersionscopolymerisatfilme auf das Stahlbelch zu prüfen. Das Ergebnis is in der Tabelle 1 zusammengefaßt wiedergegeben und zeigt das experimentell ermittelte Korrosionsverhalten des beschichteten Stahlprüfkörper und die überraschend gute korrosionsschützende Wirkung der Klarlacke aus den erfindungsgemäßen Dispersionscopolymerisaten der Beispiele 1 bis 3, vergleichsweise zum Ergebnis mit dem Klarlack aus üblichem Dispersionspolymerisat des Vergleichsbeispiels 1. Gemäß dem letzteren Versuchsergebnis war der Stahlprüfkörper bereits nach 144 Stunden Salzsprüheinwirkung durch Rost völlig zerstört, während bei den mit erfindungsgemäßen Klarlacken der Beispiele 1 bis 3 beschichteten Prüfkörpern auch nach 240 Stunden Saltzsprüheinwirkung nur geringe Korrosionserscheinungen beobachtet werden konnten.

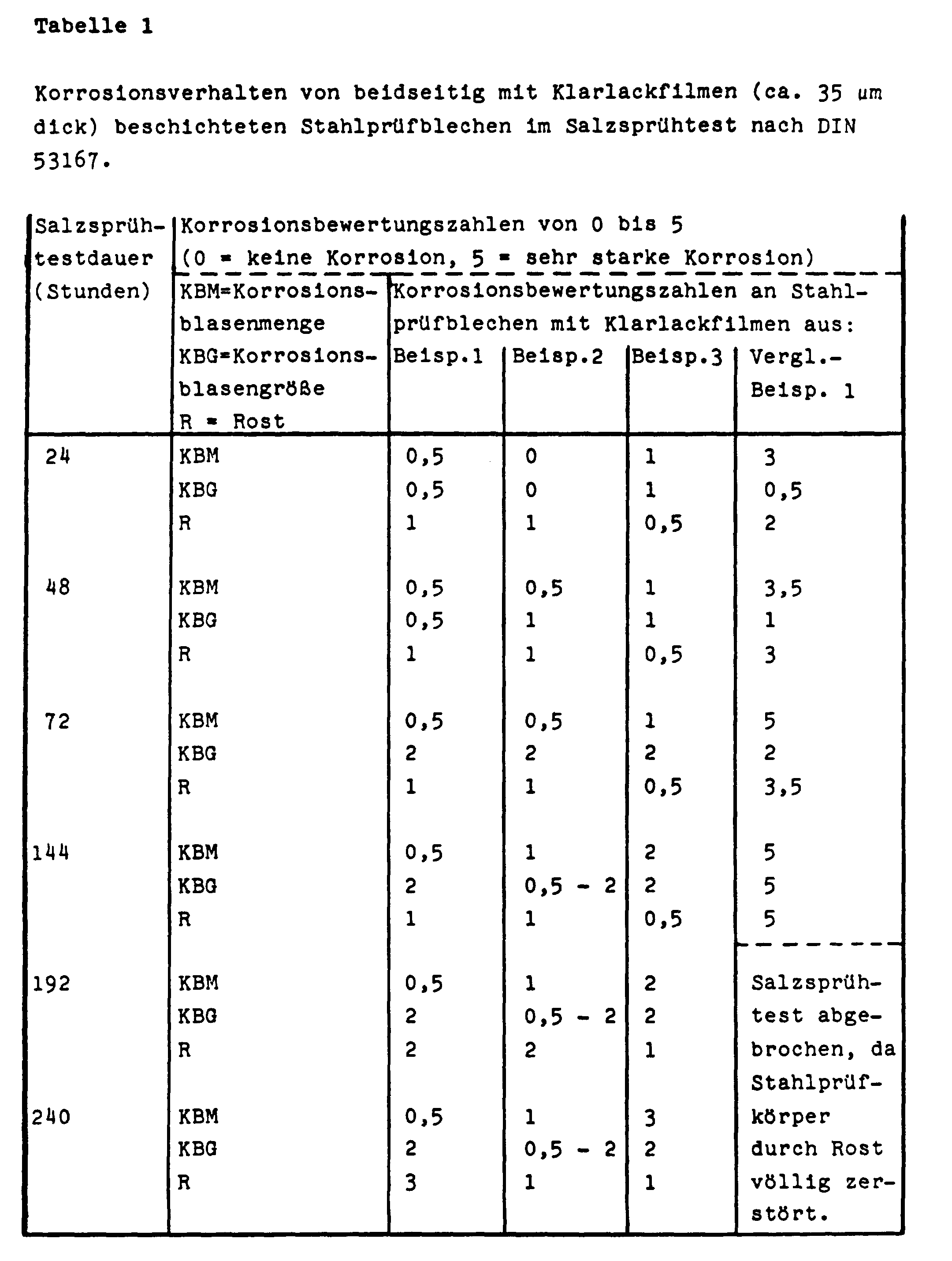

## Patentansprüche (Patentansprüche für folgende(n) Vertragsstaat(en): AT, BE, CH, DE, FR, GB, IT, LI, NL, SE)

1. Dispersionscopolymerisate auf der Basis von ethylenisch ungesättigten Monomeren, die Einheiten aus Estern oder Amiden von ethylenisch ungesättigten und (co-)polymerisationsfähigen Carbonsäuren mit Urethangruppen in den Ester- bzw. Amidresten enthalten und durch Emulsions-, Suspensions- oder Perl-Copolymerisation hergestellt worden sind, dadurch gekennzeichnet, daß sie mindestens 1 Gew.-% Monomereinheiten aus Verbindungen der Formel I, 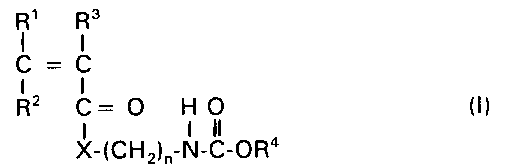 worin
R¹, R, = die gleich oder verschieden sein können, H oder CH₃,
R³ = H, CH₃,
X = O, NH,
R⁴ = (C₁-C₂₂)-Alkyl, (C₅-C₇)-Cycloalkyl, das gegebenenfalls durch (C₁-C₁₂)-Alkylreste substituiert ist, (C₆-C₁₀)-Aryl, das gegebenenfalls durch (C₁-C₁₂)-Alkylreste substituiert ist, Aralkyl mit 7 bis 24 C-Atomen, S- oder N-haltige 5- oder 6-gliedrige Ringe bildende Heterocyclen, die gegebenen-falls durch (C₁-C₆)-Alkylreste substituiert sind, oder einen β-Diketorest, und
n = eine Zahl von 2 bis 4 bedeuten,
sowie Allylacetoacetat enthalten.

2. Dispersionscopolymerisate nach Anspruch 1, dadurch gekennzeichnet, daß sie mindestens 4 Gew.-% Monomereinheiten aus Verbindungen der Formel I enthalten und durch Perl- oder Emulsionscopolymerisation hergestellt worden sind.

3. Dispersionscopolymerisate nach Anspruch 1 dadurch gekennzeichnet, daß sie außer den Monomereinheiten der Formel I und Allylacetoacetat Comonomereinheiten aus der Gruppe copolymerisationsfähiger Vinylester von (C₁-C₁₈)-Carbonsäuren, Methacrylester von (C₁-C₁₈)-Alkoholen, Acrylester von (C₁-C₁₈)-Alkoholen, Vinylaromaten mit bis zu 18 Kohlenstoffatomen, Acrylnitril, Ethylen oder Vinylchlorid enthalten.

4. Dispersionscopolymerisate nach einem oder mehreren der Ansprüche 1 bis 3, dadurch gekennzeichnet, daß sie Comonomereinheiten aus copolymerisationsfähigen ethylenisch ungesättigten Monomeren mit funktionellen Resten aus der Gruppe -OH, -SO₃H, bzw. deren Salzen, -N(R⁵)₂, -N(R⁶)₃, -COOH bzw. deren Salzen, -CON(R⁷)₂ oder Epoxid, wobei R⁵ = (C₁-C₆)-Alkyl oder H, R⁶ = (C₁-C₁₈)-Alkyl, (C₇-C₂₂)-Aralkyl, Glycidyl, H, (C₁-C₄)-Hydroxyalkyl, (C₁-C₆)-Carboxyalkyl und R⁷ = (C₁-C₆)-Alkyl, H, Methylol, (C₁-C₄)-Alkoxy, (C₂-C₆)-Alkylsulfonsäure bzw. deren Salze bedeutet, enthalten.

5. Dispersionscopolymerisate nach einem oder mehreren der Ansprüche 1 bis 4, dadurch gekennzeichnet, daß sie in Form von wäßrigen Dispersionen vorliegen, deren minimale Filmbildungstemperatur (MFT) im Bereich von 0 bis 80°C liegt.

6. Verwendung der Dispersionscopolymerisate nach einem oder mehreren der Ansprüche 1 bis 5 als Beschichtungsmasse für feste Substrate, als Ausgangsmaterial für die Herstellung von Filmen, Folien, Fasern, Klebstoffen, Lacken, korrosionsschützenden Lacken für Metalle, Pressmassen und Formkörpern, als Verdicker in wäßrigen Zubereitungen und als Imprägniermittel für poröse Substrate.

7. Verwendung der Dispersionscopolymerisate nach einem oder mehreren der Ansprüche 1 bis 5 als Hilfsstoffe zum Verkleben von Leder, Textilien, Papier, als Bindemittel bei der Faserlederherstellung, der Papierherstellung, der Papierveredlung und der Textilimprägnierung, in der Bauindustrie als Bindemittel bei der Herstellung von Beton, Mörtel, Putz und Anstrichen.

## Patentansprüche (Patentansprüche für folgende(n) Vertragsstaat(en): ES)

1. Verfahren zur Herstellung von Dispersionscopolymerisaten auf der Basis von ethylenisch ungesättigten Monomeren, die Einheiten aus Estern oder Amiden von ethylenisch ungesättigten und (co-)polymerisationsfähigen Carbonsäuren mit Urethangruppen in den Ester- bzw. Amidresten enthalten in wäßriger Dispersionsform durch Emulsions-, Suspensions- oder Perl-Copolymerisation, dadurch gekennzeichnet, daß mindestens 1 Gew.-% bezogen auf die Gesamtmonomerenmenge, Monomere der Formel I, 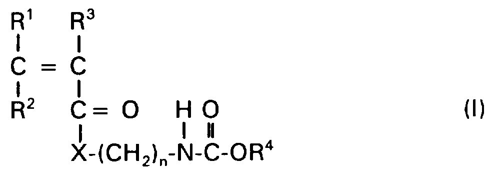 worin
R¹, R, = die gleich oder verschieden sein können, H oder CH₃,
R³ = H, CH₃,
X = O, NH,
R⁴ = (C₁-C₂₂)-Alkyl, (C₅-C₇)-Cycloalkyl, das gegebenenfalls durch (C₁-C₁₂)-Alkylreste substituiert ist, (C₆-C₁₀)-Aryl, das gegebenenfalls durch (C₁-C₁₂)-Alkylreste substituiert ist, Aralkyl mit 7 bis 24 C-Atomen, S- oder N-haltige 5- oder 6-gliedrige Ringe bildende Heterocyclen, die gegebenen-falls durch (C₁-C₆)-Alkylreste substituiert sind, oder einen β-Diketorest, und
n = eine Zahl von 2 bis 4 bedeuten,
sowie Allylacetoacetat zur Polymerisation eingesetzt und gegebenenfalls die Dispersionscopolymerisate aus der wäßrigen Dispersion in feindisperser, trockener Pulverform isoliert werden.

2. Verfahren nach Anspruch 1, dadurch gekennzeichnet, daß mindestens 4 Gew.-% Monomere der Formel I eingesetzt werden und das Verfahren als Perl - oder Emulsionscopolymerisation durchgeführt wird.

3. Verfahren nach Anspruch 1, dadurch gekennzeichnet, daß außer den Monomeren der Formel I und Allylacetoacetat Comonomere aus der Gruppe üblicher copolymerisationsfähiger Vinylester von (C₁-C₁₈)-Carbonsäuren, Methacrylester von (C₁-C₁₈)-Alkoholen, Acrylester von (C₁-C₁₈)-Alkoholen, Vinylaromaten mit bis zu 18 Kohlenstoffatomen, Acrylnitril, Ethylen oder Vinylchlorid eingesetzt werden.

4. Verfahren nach einem oder mehreren der Ansprüche 1 bis 3, dadurch gekennzeichnet, daß als Comonomere copolymerisationsfähige ethylenisch ungesättigte Monomere mit funktionellen Resten aus der Gruppe -OH, -SO₃H, bzw. deren Salzen, -N(R⁵)₂, -N(R⁶)₃, -COOH bzw. deren Salzen, -CON(R⁷)₂ oder Epoxid, wobei R⁵ = (C₁-C₆)-Alkyl oder H, R⁶ = (C₁-C₁₈)-Alkyl, (C₇-C₂₂)-Aralkyl, Glycidyl, H, (C₁-C₄)-Hydroxyalkyl, (C₁-C₆)-Carboxyalkyl und R⁷ = (C₁-C₆)-Alkyl, H, Methylol, (C₁-C₄)-Alkoxy, (C₂-C₆)-Alkylsulfonsäure bzw. deren Salze bedeutet, eingesetzt werden.

5. Verfahren nach einem oder mehreren der Ansprüche 1 bis 4, dadurch gekennzeichnet, daß die Dispersionscopolymerisate in Form von wäßrigen Dispersionen erhalten werden, deren minimale Filmbildungstemperatur (MFT) im Bereich von 0 bis 80°C liegt.

6. Verwendung der Dispersionscopolymerisate erhalten nach einem oder mehreren der Ansprüche 1 bis 5 als Beschichtungsmasse für feste Substrate, als Ausgangsmaterial für die Herstellung von Filmen, Folien, Fasern, Klebstoffen, Lacken, korrosionsschützenden Lacken für Metalle, Pressmassen und Formkörpern, als Verdicker in wäßrigen Zubereitungen und als Imprägniermittel für poröse Substrate.

7. Verwendung der Dispersionscopolymerisate, erhalten nach einem oder mehreren der Ansprüche 1 bis 5 als Hilfsstoffe zum Verkleben von Leder, Textilien, Papier, als Bindemittel bei der Faserlederherstellung, der Papierherstellung, der Papierveredlung und der Textilimprägnierung, in der Bauindustrie als Bindemittel bei der Herstellung von Beton, Mörtel, Putz und Anstrichen.

## Claims (Claims for the following Contracting State(s): AT, BE, CH, DE, FR, GB, IT, LI, NL, SE)

1. A dispersion copolymer which is based on ethylenically unsaturated monomers and contains units of esters or amides of ethylenically unsaturated carboxylic acids which are capable of (co)polymerization and contain urethane groups in the ester or amide radicals, and has been prepared by emulsion, suspension or bead copolymerization, which copolymer contains at least 1% by weight of monomer units comprising compounds of the formula I 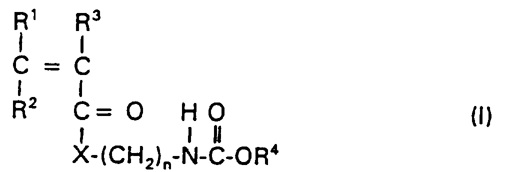 in which
R¹ and R may be identical or different and denote H or CH₃,
R³ denotes H or CH₃,
X denotes O or NH,
R⁴ denotes (C₁-C₂₂)-alkyl, (C₅-C₇)-cycloalkyl which is optionally substituted by (C₁-C₁₂)-alkyl radicals, (C₆-C₁₀)-aryl which is optionally substituted by (C₁-C₁₂)-alkyl radicals, aralkyl having 7 to 24 carbon atoms, heterocyclic radicals which form S- or N-containing 5- or 6-membered rings and are optionally substituted by (C₁-C₆)-alkyl radicals, or a β-diketo radical and
n denotes a number from 2 to 4,
and allyl acetoacetate.

2. A dispersion copolymer as claimed in claim 1, which contains at least 4% by weight of monomer units comprising compounds of the formula I and has been prepared by bead or emulsion copolymerization.

3. A dispersion copolymer as claimed in claim 1, which contains, in addition to the monomer units of the formula I and allyl acetoacetate, comonomer units from the group consisting of copolymerization-capable vinyl esters of (C₁-C₁₈)-carboxylic acids, methacrylates of (C₁-C₁₈)-alcohols, acrylates of (C₁-C₁₈)-alcohols vinyl aromatic compounds having up to 18 carbon atoms, acrylonitrile, ethylene and vinyl chloride.

4. A dispersion polymer as claimed in one or more of claims 1 to 3, which contains comonomer units comprising ethylenically unsaturated monomers which are capable of copolymerization and contain functional radicals from the group consisting of -OH, -SO₃H or salts thereof, -N(R⁵)₂, -N(R⁶)₃, -COOH or salts thereof, -CON(R⁷)₂ and epoxide, where R⁵ denotes (C₁-C₆)-alkyl or H, R⁶ denotes (C₁-C₁₈)-alkyl, (C₇-C₂₂)-aralkyl, glycidyl, H, (C₁-C₄)-hydroxyalkyl or (C₁-C₆)-carboxyalkyl and R⁷ denotes (C₁-C₆)-alkyl, H, methylol, (C₁-C₄)-alkoxy, (C₂-C₆)-alkylsulfonic acid or salts thereof.

5. A dispersion copolymer as claimed in one or more of claims 1 to 4, in the form of an aqueous dispersion whose minimum film-formation temperature (MFT) is in the range from 0 to 80°C.

6. The use of a dispersion copolymer as claimed in one or more of claims 1 to 5 as a coating composition for solid substrates, as a starting material for the production of films, foils, fibers, adhesives, surface coatings, corrosion-protecting surface coatings for metals, compression molding compositions and moldings, as a thickener in aqueous formulations and as an impregnating agent for porous substrates.

7. The use of a dispersion copolymer as claimed in one or more of claims 1 to 5 as an auxiliary for bonding leather, textiles and paper, as a binder in the manufacture of fibrous leather, in papermaking, in paper finishing and in textile impregnation, and in the construction industry as a binder in the production of concrete, mortar, plaster and paints.

## Claims (Claims for the following Contracting State(s): ES)

1. A process for the preparation of a dispersion copolymer which is based on ethylenically unsaturated monomers and contains units of esters or amides of ethylenically unsaturated carboxylic acids which are capable of (co)polymerization and contain urethane groups in the ester or amide radicals, in the form of an aqueous dispersion by emulsion, suspension or bead copolymerization, which comprises using for the polymerization at least 1% by weight, based on the total amount of monomer, of monomers of the formula I 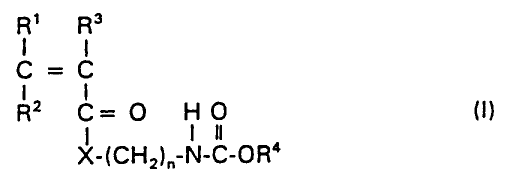 in which
R¹ and R may be identical or different and denote H or CH₃,
R³ denotes H or CH₃,
X denotes O or NH,
R⁴ denotes (C₁-C₂₂)-alkyl, (C₅-C₇)-cycloalkyl which is optionally substituted by (C₁-C₁₂)-alkyl radicals, (C₆-C₁₀)-aryl which is optionally substituted by (C₁-C₁₂)-alkyl radicals, aralkyl having 7 to 24 carbon atoms, heterocyclic radicals which form S- or N-containing 5- or 6-membered rings and are optionally substituted by (C₁-C₆)-alkyl radicals, or a β-diketo radical and
n denotes a number from 2 to 4,
and allyl acetoacetate and, if desired, isolating the dispersion copolymer from the aqueous dispersion in the form of a finely disperse dry powder.

2. A process as claimed in claim 1, wherein at least 4% by weight of monomers of the formula I are used, and the process is carried out as a bead or emulsion copolymerization.

3. A process as claimed in claim 1, wherein comonomers from the group consisting of customary copolymerization-capable vinyl esters of (C₁-C₁₈)-carboxylic acids, methacrylates of (C₁-C₁₈)-alcohols, acrylates of (C₁-C₁₈)-alcohols, vinyl aromatic compounds having up to 18 carbon atoms, acrylonitrile, ethylene and vinyl chloride are used in addition to the monomers of the formula I and allyl acetoacetate.

4. A process as claimed in one or more of claims 1 to 3, wherein the comonomers used are ethylenically unsaturated monomers which are capable of copolymerization and contain functional radicals from the group consisting of -OH, -SO₃H or salts thereof, - N(R⁵)₂, -N(R⁶)₃, -COOH or salts thereof, -CON(R⁷)₂ and epoxide, where R⁵ denotes (C₁-C₆)-alkyl or H, R⁶ denotes (C₁-C₁₈)-alkyl, (C₇-C₂₂)-aralkyl, glycidyl, H, (C₁-C₄)-hydroxyalkyl or (C₁-C₆)-carboxyalkyl and R⁷ denotes (C₁-C₆)-alkyl, H, methylol, (C₁-C₄)-alkoxy, (C₂-C₆)-alkylsulfonic acid or salts thereof.

5. A process as claimed in one or more of claims 1 to 4, wherein the dispersion copolymer is in the form of an aqueous dispersion whose minimum film-formation temperature (MET) is in the range from 0 to 80°C.

6. The use of a dispersion copolymer, obtained as claimed in one or more of claims 1 to 5, as a coating composition for solid substrates, as a starting material for the production of films, foils, fibers, adhesives, surface coatings, corrosion-protecting surface coatings for metals, compression molding compositions and moldings, as a thickener in aqueous formulations and as an impregnating agent for porous substrates.

7. The use of a dispersion copolymer, obtained as claimed in one or more of claims 1 to 5, as an auxiliary for bonding leather, textiles and paper, as a binder in the manufacture of fibrous leather, in papermaking, in paper finishing and in textile impregnation, and in the construction industry as a binder in the production of concrete, mortar, plaster and paints.

## Revendications (Revendications pour l'(les) Etat(s) contractant(s) suivant(s): AT, BE, CH, DE, FR, GB, IT, LI, NL, SE)

1. Copolymères en dispersion à base de monomères à insaturation éthylénique qui renferment des motifs d'esters ou d'amides d'acides carboxyliques à insaturation éthylénique et (co)-polymérisables avec des groupes uréthannes qui renferment des radicaux esters respectivement amides et que l'on prépare par copolymérisation en émulsion, en suspension ou en perls caractérisés en ce qu'ils contiennent au moins 1 % en poids de motifs monomères des composés de formule I 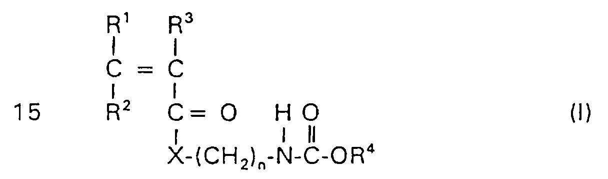 où
R¹, R peuvent être identiques ou différents, représentent H ou CH₃,
R³ représente H, CH₃,
X représente O, NH,
R⁴ représente alkyle en (C₁-C₂₂), cycloalkyle en (C₅-C₇) qui peut être éventuellement substitué par des radicaux alkyle en (C₁-C₁₂), aryle en (C₆-C₁₀) qui peut être éventuellement substitué par des radicaux alkyle en (C₁-C₁₂), aralkyle avec 7 à 24 atomes de carbone, des hétérocycles formant des cycles à 5 ou 6 chaînons contenant S ou N qui sont éventuellement substitués par des radicaux alkyles en C₁-C₆, ou représente un radical β-dicéto, et
n va de 2 à 4,
ainsi que l'acétoacétate d'allyle.

2. Copolymères en dispersion selon la revendication 1, caractérisés en ce qu'ils renferment au moins 4 % en poids en motifs monomères des composés de formule I et que l'on peut préparer par copolymérisation en perles ou en émulsion.

3. Copolymères en dispersion selon la revendication 1, caractérisés en ce qu'ils renferment outre les unités monomères de formule I et l'acétoacétate d'allyle, des motifs de comonomères du groupe comportant le chlorure de vinyle, l'éthylène, l'acrylonitrile, des composés vinylaromatiques comportant jusqu'à 18 atomes de carbone, des esters acryliques des alcools en (C₁-C₁₈), des esters méthacryliques des alcools en (C₁-C₁₈), des esters vinyliques des acides carboxyliques en (C₁-C₁₈), copolymérisables.

4. Copolymères en disperson selon une ou plusieurs des revendications 1 à 3, caractérisés en ce qu'ils renferment des motifs comonomères de monomères à insaturation éthylénique copolymérisables ayant des radicaux fonctionnels pris dans le groupe -OH, -SO₃H, ou bien leurs sels, -N(R⁵)₂, -N(R⁶)₃, -COOH ou bien leurs sels, -CON(R⁷)₂ ou époxyde, où R⁵ représente alkyle en (C₁-C₆) ou H, R⁶ représente alkyle en (C₁-C₁₈), aralkyle en (C₇-C₂₂), glycidyle, H, hydroxyalkyle en (C₁-C₄), carboxyalkyle en (C₁-C₆) et R⁷ représente alkyle en (C₁-C₆), H, méthylol, alcoxy en (C₁-C₄) acide alkylsulfonique en (C₂-C₆), respectivement leurs sels.

5. Copolymères en dispersion selon une ou plusieurs des revendications 1 à 4, caractérisés en ce qu'ils se présentent sous forme de dispersions, dont la température filmogène minimale se trouve dans l'intervalle de 0 à 80°C.

6. Utilisation des copolymères en dispersion selon une ou plusieurs des revendications 1 à 5 comme masses d'enduit de substrats solides, comme matières de départ pour la préparation de pellicules, de feuilles, de fibres, d'adhésifs, de vernis, de vernis protecteurs contre la corrosion de métaux, de masses de moulage et d'objets moulés, comme épaississants dans des préparations aqueuses et en tant qu'agents d'imprégnation de substrats poreux.

7. Utilisation des copolymères en dispersion selon une ou plusieurs des revendications 1 à 5, comme adjuvant pour le collage de cuir, de textiles, de papier, comme agents liants pour la préparation du cuir fibreux, du papier, de l'anoblissement de papier et pour l'impregnation de matières textiles, dans l'industrie du bâtiment comme liant pour la préparation de béton, de mortier, de plâtre et d'enduit.

## Revendications (Revendications pour l'(les) Etat(s) contractant(s) suivant(s): ES)

1. Procédé pour la préparation de copolymères en dispersion à base de monomères à insaturation éthylénique, qui renferment des motifs d'esters ou d'amides d'acides carboxyliques à insaturation éthylénique et (co)-polymérisables avec des groupes uréthannes, qui renferment des radicaux esters respectivement amides et que l'on prépare par copolymérisation en émulsion, en suspension ou en perles caractérisés en ce qu'ils contiennent au moins 1 % en poids de motifs monomères des composés de formule I 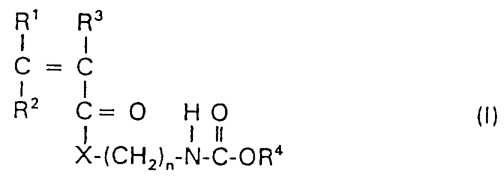 où
R¹, R peuvent être identiques ou différents, représentent H ou CH₃,
R³ représente H, CH₃,
X représente O, NH,
R⁴ représente alkyle en (C₁-C₂₂), cycloalkyle en (C₅-C₇) qui peut être éventuellement substitué par des radicaux alkyle en (C₁-C₁₂), aryle en (C₆-C₁₀) qui peut être éventuellement substitué par des radicaux alkyle en (C₁-C₁₂), aralkyle avec 7 à 24 atomes de carbone, des hétérocycles formant des cycles à 5 ou 6 chaînons contenant S ou N qui sont éventuellement substitués par des radicaux alkyles en (C₁-C₆), ou représente un radical β-dicéto, et
n va de 2 à 4,
ainsi que l'acétoacétate d'allyle, utilisés pour la polymérisation, et éventuellement on isole les copolymères en dispersion à partir de la dispersion aqueuse sous forme sèche pulvérulente, finement dispersée.

2. Procédé selon la revendication 1, caractérisé en ce qu'on utilise au moins 4 % en poids de monomères de formule I et on met en oeuvre le procédé comme copolymérisation en perles ou en émulsion.

3. Procédé selon la revendication 1, caractérisé en ce qu'on utilise outre les monomères de formule I et l'acétoacétate d'allyle, des motifs de comonomères du groupe comportant le chlorure de vinyle, l'éthylène, l'acrylonitrile, des composés vinylaromatiques comportant jusqu'à 18 atomes de carbone, des esters acryliques des alcools en (C1-C18), des esters méthacryliques des alcools en (C₁-C₁₈), des esters vinyliques des acides carboxyliques en (C₁-C₁₈) copolymérisables usuels.

4. Procédé selon une ou plusieurs des revendications 1 à 3, caractérisé en ce qu'on utilise en tant que comonomères des monomères à insaturation éthylénique copolymérisables ayant des radicaux fonctionnels pris dans le groupe comportant -OH, -SO₃H ou bien leurs sels, -N(R⁵)₂, -N(R⁶)₃, -COOH ou bien leurs sels, -CON(R⁷)₂ ou époxyde où R⁵ représente alkyle en (C₁-C₆) ou H, R⁶ représente alkyle en (C₁-C₁₈), aralkyle en (C₇-C₂₂), glycidyle, H, hydroxyalkyle en (C₁-C₄), carboxyalkyle en (C₁-C₆), et R⁷ représente alkyle en (C₁-C₆), H, méthylol, alcoxy en (C₁-C₄) acide alkylsulfonique en (C₂-C₆), respectivement leurs sels.

5. Procédé selon une ou plusieurs des revendications 1 à 4, caractérisé en ce que les copolymères en dispersion se présentent sous forme de dispersions, dont la température filmogène minimale se trouve dans l'intervalle de 0 à 80°C.

6. Utilisation des copolymères en dispersion obtenus selon une ou plusieurs des revendications 1 à 5, comme masses d'enduit de substrats solide, comme matières de départ pour la préparation de pellicules, de feuilles, de fibres, d'adhésifs, de vernis, de vernis protecteurs contre la corrosion de métaux, de masses de moulage et d'objets moulés, comme épaississants dans des préparations aqueuses et en tant qu'agents d'imprégnation de substrats poreux.

7. Utilisation des copolymères en dispersion selon une ou plusieurs des revendications 1 à 5, comme adjuvants pour le collage du cuir, des textiles, du papier, comme agents liants pour la préparation du cuir fibreux, du papier, de l'anoblissement de papier et pour l'imprégnation de matières textiles, dans l'industrie du bâtiment comme liant pour la préparation de béton, de mortier, de plâtre et d'enduit.
